# EUROPÄISCHE PATENTANMELDUNG

(11) **EP 4 273 499 A1**
(43) Veröffentlichungstag der Anmeldung: **08.11.2023**
(21) Anmeldenummer: 23169161.9
(22) Anmeldetag: 21.04.2023
(51) Int. Cl.: G01C 15/02

(54) **VORRICHTUNG ZUM SETZEN VON MARKIERUNGEN**

(30) Priorität: 06.05.2022 DE 202022102499 U
(71) Anmelder: Rothbucher, Georg, 83435 Bad Reichenhall (DE)
(72) Erfinder: Rothbucher, Georg, 83435 Bad Reichenhall (DE)
(74) Vertreter: Schaumburg und Partner Patentanwälte mbB

(57) **Zusammenfassung**

Beschrieben ist eine Vorrichtung (100, 500) zum Setzen von Markierungen an Bauteilen. Die Vorrichtung umfasst ein Anlageteil (102) zum Anlegen an das Bauteil, ein Verschiebeelement (110), das an dem Anlageteil (102) zwischen einer ersten und einer zweiten Position verschiebbar angeordnet ist, und einen Reflektor (112, 504), der mit dem Verschiebeelement (110) verbunden ist. Das Anlageteil (102) umfasst zumindest ein durchgehendes Markierungsloch (106, 108), das einen Markierungspunkt definiert. Der Markierungspunkt und der Reflektor (112, 504) sind entlang einer Ausrichtungsachse (116, 118) angeordnet, wenn das Verschiebeelement (110) in der ersten Position ist. In einer zweiten Position des Verschiebeelements (110) ist das Markierungsloch (106, 108) zugänglich.

## Beschreibung

### Technisches Gebiet

Die Erfindung betrifft eine Vorrichtung zum Setzen von Markieren an Bauteilen.

### Hintergrund der Erfindung

Bei der Baustellenvermessung kommen regelmäßig Messgeräte wie beispielsweise Laser, Scanner und Totalstationen zum Einsatz, um Konstruktionsdaten, beispielsweise eines Bauwerks, relativ zu Bezugspunkten auf ein Gelände oder Grundstück zu übertragen. Beispielsweise können so vor Erstellung des Bauwerks die genauen Positionen einzelner Bauteile des Bauwerks im Gelände bestimmt und markiert werden. Auch können so im Verlauf des Baus relevante Positionen an Bauteilen bestimmt und markiert werden, beispielsweise Positionen von Rohrdurchlässe, Aussparungen in Betonteilen oder Aufhängepositionen für Bauelemente oder Betriebsgeräte. Dieser Vorgang der Positionsbestimmung und Markierungssetzung wird auch als Abstecken bezeichnet.

Um die Positionen mit Hilfe des Messgerätes aufzufinden können insbesondere Reflektoren genutzt werden, die in Bezug zu der Totalstation auf Bauteilen so ausgerichtet werden, dass sie sich in der gesuchten Position befinden oder diese anzeigen. Anschließend kann die Position auf dem Bauteil markiert werden. Dabei gilt es Messfehler zu verringern und so genaue Markierungen zu erhalten und gleichzeitig den Zeitaufwand für die Positionsbestimmung und anschließende Markierung zu reduzieren.

Es ist daher eine Aufgabe der Erfindung, eine Vorrichtung zum Setzen von Markierungen an Bauteilen anzugeben, die einfach zu bedienen sind und eine genaue Positionsbestimmung und Markierung ermöglichen.

Diese Aufgabe wird durch den Gegenstand des unabhängigen Anspruchs gelöst. Vorteilhafte Weiterbildungen sind in den abhängigen Ansprüchen angegeben.

### Zusammenfassung

Eine Vorrichtung zum Setzen von Markierungen an Bauteilen, insbesondere mit Hilfe einer Totalstation, umfasst ein Anlageteil zum Anlegen an das Bauteil, ein Verschiebeelement, das in dem Anlageteil zwischen einer ersten und einer zweiten Position verschiebbar angeordnet ist, und einem Reflektor, der mit dem Verschiebeelement verbunden ist. Der Anlageteil umfasst zumindest ein durchgehendes Markierungsloch, das einen Markierungspunkt definiert. Der Markierungspunkt liegt insbesondere auf dem Bauteil, wenn die Vorrichtung an dem Bauteil angelegt ist. Weiterhin sind der Markierungspunkt und der Reflektor entlang einer Ausrichtungsachse angeordnet, wenn das Verschiebeelement in der ersten Position ist, und das Markierungsloch zugänglich ist, wenn das Verschiebeelement in der zweiten Position ist. Die erfindungsgemäße Vorrichtung wird auch als Absteckhilfe bezeichnet.

Der Reflektor umfasst insbesondere ein Reflektionselement, wie eine Reflexzielmarke oder ein Prisma, insbesondere ein retroflektierendes Tripel-Prisma, welche ein optisches Signal der Totalstation zurück zur Totalstation reflektieren. Dies erlaubt eine Distanzmessung und Positionsbestimmung des Reflektionselements relativ zur Totalstation.

Die an das Bauteil angelegte Vorrichtung kann mit Hilfe der Totalstation auf dem Bauteil ausgerichtet werden. Dabei wird die Position des Reflektors, insbesondere des Reflektionselements, relativ zur Totalstation ermittelt und anhand von Konstruktionsdaten an eine gewünschte, zu markierende Position geführt. Das Verschiebeelement kann dann in die jeweils andere Position verschoben werden um das Markierungsloch zugänglich zu machen. So ist es dann möglich eine Markierung auf dem Bauteil durch das Markierungsloch hindurch zu setzen, beispielsweise mit einem Stift, ohne die Vorrichtung bewegen zu müssen. Dadurch ist es möglich genau und einfach Markierungen auf Bauteilen zu setzen.

Ebenso ist es möglich mit Hilfe der Vorrichtung und der Totalstation die Position bereits gesetzter Markierungen nachträglich zu kontrollieren.

Vorzugsweise ist die Ausrichtungsachse orthogonal zu einer durch das Anlageteil definierten Ebene. Die Ebene wird insbesondere durch eine an dem Bauteil anlegbaren planen Anlageseite definiert. Dies ermöglicht eine besonders genaue Ausrichtung der Vorrichtung.

Besonders bevorzugt ist, dass der Anlageteil ein weiteres Markierungsloch umfasst, das einen weiteren Markierungspunkt definiert. Das weitere Markierungsloch ist zugänglich, wenn das Verschiebeelement in der ersten Position ist. Weiterhin ist das weitere Markierungsloch nicht zugänglich, wenn in das Verschiebeelement in der zweiten Position ist. Das Wechseln zwischen der ersten und zweiten Position des Verschiebeelements gibt somit entweder das Markierungsloch oder das weitere Markierungsloch (und die entsprechenden Markierungspunkte) frei während das jeweils andere Markierungsloch durch das Verschiebeelement verdeckt ist. Dies ermöglicht es, Markierungen besonders schnelle zu setzen, indem die Markierungslöcher abwechselnd benutzt werden.

In einer bevorzugten Ausführungsform sind der weitere Markierungspunkt und der Reflektor entlang einer weiteren Ausrichtungsachse angeordnet, wenn sich das Verschiebeelement in der zweiten Position befindet. Die weitere Ausrichtungsachse ist dabei vorzugsweise orthogonal zur Ebene des Anlageteils. Dies reduziert Fehler bei der Ausrichtung der Vorrichtung.

Vorzugsweise umfasst der Reflektor ein Reflektionselement, das einen Lichtstrahl retroflektiert, und der Abstand zwischen dem Markierungspunkt und dem Mittelpunkt des Reflektionselements entlang der Ausrichtungsachse ein vorbestimmter Abstand ist. Weiterhin entspricht der Abstand zwischen den Markierungslöchern, insbesondere den Markierungspunkten, vorzugsweise dem vorbestimmten Abstand. Dies ermöglicht es den Abstand zwischen der mit Hilfe der Totalstation bestimmten Position des Reflektionselements und dem jeweiligen Markierungspunkt zu berücksichtigen, um den Markierungspunkt genauer auf die gewünschte, zu markierende Position auszurichten.

Vorzugsweise hat das Anlageteil eine im Wesentlichen rechteckige Grundfläche. Dies ermöglicht eine besonders kompakte Bauweise.

Vorzugsweise ist das Anlageteil so ausgebildet, dass der Abstand von dem Markierungspunkt des Markierungslochs zu drei der Seiten der Grundfläche des Anlageteils jeweils ein weiterer vorbestimmter Abstand ist. Das ermöglicht das Setzen von weiteren Markierungen mit Bezug zum Markierungsloch.

Besonders bevorzugt ist es, wenn der vorbestimmte Abstand gleich dem weiteren vorbestimmten Abstand ist. Das vereinfacht die Bedienung der Vorrichtung, da die verwendeten Abstände alle gleich sind. Insbesondere kann der vorbestimmte Abstand und der weitere vorbestimmte Abstand 50 mm sein.

In einer bevorzugten Ausführungsform umfasst das Anlageteil Markierungen, die jeweils entlang einer Linie von dem Markierungspunkt des Markierungslochs zu einer der Seiten des Anlageteils angeordnet sind. Das ermöglicht eine einfache Orientierung und Ausrichtung der Vorrichtung.

Bevorzugt ist es, dass das Verschiebeelement zumindest in der ersten Position oder der zweiten Position um die Ausrichtungsachse drehbar ist. Beim Drehen des Verschiebeelements dreht sich ebenso das Reflektionselement um die Ausrichtungsachse. Dadurch ist der Reflektor, insbesondere das Reflektionselement, einfach in Richtung der Totalstation ausrichtbar.

Vorzugsweise umfasst das Verschiebeelement zumindest ein Kugeldruckstück. Das Kugelstück umfasst beispielsweise eine Presshülse mit integrierter Feder und einer an der Feder elastisch gelagerten, rotierbaren Kugel. Besonders vorzugsweise umfasst das Verschiebeelement 2 Kugeldruckstücke oder 4 Kugeldruckstücke. Das ermöglicht ein besonders einfaches Verschieben und/oder Drehen des Verschiebeelements.

Besonders bevorzugt ist es, wenn das Anlageteil zumindest eine Anlageplatte umfasst, die auf der dem Verschiebeelement zugewandten Seite eine Rille umfasst, in der das Kugeldruckstück führbar ist, vorzugsweise ist die Rille kreisförmig um die Ausrichtungsachse angeordnet. Insbesondere ist das Verschiebeelement so beim Drehen des Verschiebeelements um die Ausrichtungsachse führbar, wenn das Verschiebelement in der ersten oder der zweiten Positionen ist. Insbesondere rastet das Verschiebeelement so sicher in der ersten oder der zweiten Position ein.

Vorzugsweise umfasst die Anlageplatte auf der dem Verschiebeelement zugewandten Seite zumindest eine Einrastaussparung, in die das Kugeldruckstück einrastet, wenn sich das Verschiebeelement in der ersten oder der zweiten Position befindet. Besonders vorzugsweise umfasst die Anlageplatte acht Einrastaussparungen, die entlang der Rille um die Ausrichtungsachse angeordnet sind; so kann das Verschiebeelement beim Drehen in verschiedenen Winkel eingerastet werden.

Vorzugsweise umfasst das Verschiebeelement zumindest einen Aufnahmevorsprung, an den ein Ausrichtungselement aufschiebbar ist. Beispielsweise umfasst das Ausrichtungselement zumindest eine Libelle, die zum Ausrichten der Vorrichtung, insbesondere des Reflektionselement eine genaue Ausrichtung erlaubt.

Vorzugsweise umfasst das Anlageteil auf der dem Verschiebeelement abgewandten Seite Gummielement. Dies verhindert verrutschen auf dem Bauteil, wenn die Vorrichtung an das Bauteil angelegt ist.

Vorzugsweise umfasst das Anlageteil Magneten. Diese ermöglichen ein reversibles Befestigen der Absteckhilfe an ferromagnetischen Bauteilen.

Vorzugsweise umfasst die Vorrichtung ein Kantenteil, das an dem Anlageteil lösbar angeordnet ist, wobei eine Seite des Kantenteils eine Ebene bildet, die die durch das Anlageteil, insbesondere durch die Anlageseite, definierte Ebene im rechten Winkel schneidet und die Ausrichtungsachse in der Ebene des Kantenteils liegt. Dies ermöglicht das exakte Anlegen der Vorrichtung an eine Kante des Bauteils, insbesondere eine Kante des Bauteils die sich durch zwei im Winkel von 90° zueinanderstehenden Bereiche des Bauteils ergibt. Das Anlageteil und das Kantenteil können dazu an jeweils einen der Bereiche angelegt werden, so dass der Markierungspunkt an der Kante des Bauteils anliegt. Dadurch kann mit Hilfe der Vorrichtung und der Totalstation die Position der Kante des Bauteils überprüft werden kann oder eine Markierung entlang der Kante des Bauteils gesetzt werden.

### Kurzbeschreibung der Figuren

Weitere Merkmale und Vorteile ergeben sich aus der folgenden Beschreibung, die beispielhafte Ausführungsformen in Verbindung mit den beigefügten Figuren näher erläutert.

Es zeigen:
- Figur 1: eine perspektivische Ansicht einer Vorrichtung zum Setzen von Markierungen,
- Figur 2: eine Seitenansicht der Vorrichtung,
- Figur 3: eine weitere Seitenansicht der Vorrichtung,
- Figur 4: eine Draufsicht der Vorrichtung,
- Figur 5: eine zweite Ausführungsform der Vorrichtung,
- Figur 6: eine Explosionszeichnung der Vorrichtung nach Figur 1,
- Figur 7: eine weitere Explosionszeichnung der Vorrichtung nach Figur 1,
- Figur 8: ist eine perspektivische Explosionszeichnung der Vorrichtung nach Figur 1,
- Fig. 9: ist eine perspektivische Ansicht der Vorrichtung mit einem Kantenteil, und
- Fig. 10: ist eine Seitenansicht der Vorrichtung nach Figur 9.

### Ausführliche Beschreibung

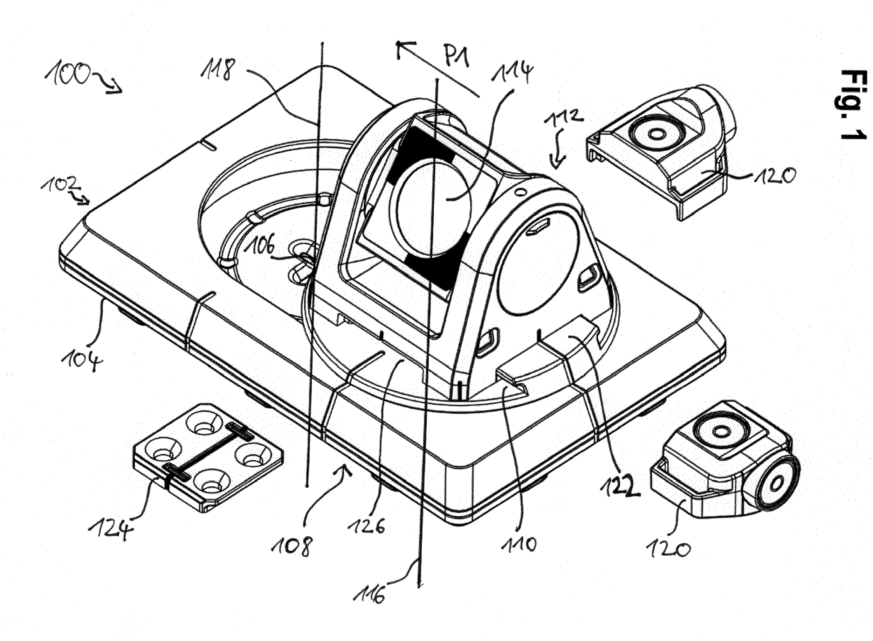

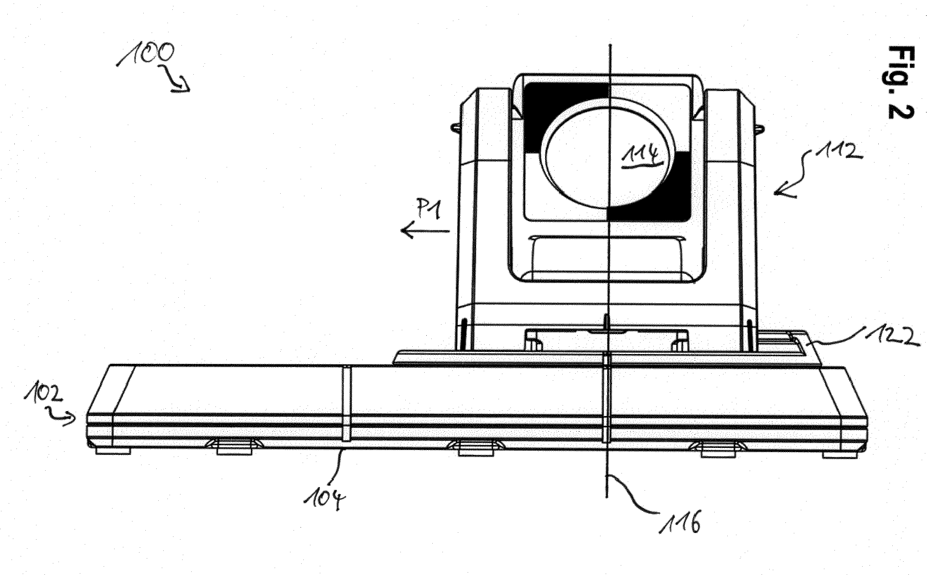

Figur 1 ist eine perspektivische Ansicht einer Vorrichtung 100 zum Setzen von Markierungen. Figur 2 ist eine Seitenansicht der Vorrichtung 100. Die Vorrichtung 100 umfasst ein Anlageteil 102, das mit einer Anlageseite 104 an ein Bauteil (nicht dargestellt) angelegt werden kann, um auf dem Bauteil eine Markierung zu setzen. Vorzugsweise ist die Anlageseite 104 plan ausgeführt. Weiterhin umfasst das Anlageteil 102 ein erstes Markierungsloch 106 und ein zweites Markierungsloch 108, das in der Darstellung nach Figur 1 durch ein Verschiebeelement 110 verdeckt ist und deswegen nicht sichtbar ist. Das erste und zweite Markierungsloch 106, 108 bilden jeweils durchgehende Löcher in dem Anlageteil 102, so dass das Bauteil an dem die Vorrichtung 100 anliegt durch die Markierungslöcher 106, 108 hindurch zugänglich ist.

Das Verschiebeelement 110 ist in Figuren 1 und 2 in einer ersten Position dargestellt. Das Verschiebeelement 110 ist mit dem Anlageteil 102 verschiebbar verbunden. Insbesondere ist das Verschiebeelement 110 in dem Anlageteil 102 zwischen der ersten Position und einer zweiten Position verschiebbar angeordnet. Der Pfeil P1 zeigt beispielsweise die Richtung an, um das Verschiebeelement 110 von der ersten in die zweite Position zu verschieben. Wenn das Verschiebeelement 110 in der zweiten Position ist, wird das erste Markierungsloch 106 von dem Verschiebeelement 110 verdeckt und das zweite Markierungsloch 108 ist zugänglich. So kann durch Verschieben des Verschiebeelements 110 wahlweise das erste Markierungsloch 106 oder das zweite Markierungsloch 108 zugänglich sein bzw. zugänglich gemacht werden. Weiterhin ist das Verschiebeelement 110 drehbar in dem Anlageteil 102 angeordnet.

Das Verschiebeelement 110 ist mit einem Reflektor 112 verbunden. Der Reflektor umfasst ein Reflektionselement 114, das ein Prisma sein kann, insbesondere ein retroreflektierendes Tripel-Prisma. Alternativ kann das Reflektionselement 114 eine reflektierende Folie sein. Der Reflektor kann auch als Reflektionszielmarke bezeichnet werden. Das Reflektionselement 114 ist vorzugsweise kippbar in dem Reflektor angeordnet.

In der gezeigten ersten Position des Verschiebeelements 110 ist der Reflektor 112, insbesondere das Reflektionselement 114, so angeordnet, dass er eine erste Ausrichtungsachse 116 schneidet. Insbesondere schneidet ein Mittelpunkt des Reflektionselements 114 die Ausrichtungsachse 116. Die Ausrichtungsachse 116 liegt weiterhin senkrecht zu einer durch die Anlageseite 104 definierten Ebene. Diese Ebene der Anlageseite 104 bzw. die Anlageseite 104 wird durch die Ausrichtungsachse 116 in einem durch das zweite Markierungsloch 108 definierten Markierungspunkt geschnitten. Der Markierungspunkt befindet sich an der Stelle des Bauteils, der durch das Markierungsloch 108 zugänglich ist, wenn die Vorrichtung 100 an dem Bauteil anliegt und an dem eine Markierung gesetzt werden kann.

Eine weitere Ausrichtungsachse 118 schneidet das erste Markierungsloch 106 und das Reflektionselement 114, wenn das Verschiebeelement 110 in der zweiten Position ist, wie für die erste Position und das zweite Markierungsloch 108 beschrieben. Weiterhin schneiden die Ausrichtungsachsen 116, 118 eine Kippachse des Reflektionselements 114.

Somit ist das Verschiebeelement 110 ist in seiner ersten Position und in seiner zweiten Position jeweils so angeordnet, dass Reflektionselement 114 entweder die Ausrichtungsachse 116 bzw. die weitere Ausrichtungsachse 118 schneidet. Insbesondere schneidet der Mittelpunkt des Reflektionselements 114 die jeweilige Ausrichtungsachse 116, 118.

Im Folgenden wird die Funktionsweise der Vorrichtung 100 näher erläutert. Das Reflektionselement 114 kann einen durch eine Totalstation ausgesendeten Lichtimpuls zur Totalstation reflektieren. Das erlaubt es, die Entfernung zwischen der Totalstation und dem Reflektionselement 114 zu ermitteln. Weiterhin kann der Winkel des von der Totalstation ausgesendeten Lichtimpulses einbezogen werden; die Totalstation kann so in an sich bekannter Weise die genaue Position des Reflektionselement relativ zu der Totalstation ermitteln. Weiterhin kann die Totalstation ihre eigene Position relativ zu Bezugspunkten ermitteln.

Anhand von Konstruktionsdaten, die die Position von Bauteilen eines Bauwerks in Bezug auf die Bezugspunkte umfassen, kann das Reflektionselement 114, und damit auch die Vorrichtung 100, mit Hilfe der Totalstation in Positionen von Bauteilen oder in Positionen an Bauteilen eingemessen werden. Insbesondere kann dadurch die Vorrichtung 100 so platziert werden, dass der durch das erste oder zweite Markierungsloch 106, 108 definierte Markierungspunkt auf der jeweiligen relevanten Position liegt.

Das heißt, beim Anlegen der Vorrichtung 100 an das Bauteil und Einmessen in die entsprechende relevante Position ist die relevante Position durch das erste oder das zweite Markierungsloch 106, 108 hindurch zugänglich. Dabei ist der jeweilige Markierungspunkt und die relevante Position zumindest im Wesentlichen denkungsgleich. So kann durch das erste oder zweite Markierungsloch 106, 108 eine Markierung an der Position an dem Bauteil gesetzt werden. In anderen Worten, zum Setzen einer Markierung an dem Bauteil mit Hilfe der Vorrichtung 100 wird die Anlageseite 104 des Anlageteils 102 der Vorrichtung 100 an das Bauteil angelegt und durch das erste oder zweite Markierungsloch 106, 108 hindurch beispielsweise mit einem Stift markiert.

Beim Setzen der Markierung ist weiterhin vorteilhaft, dass das Verschiebeelement 110 zwischen der ersten Position und der zweiten Position verschiebbar ist. Wenn das Verschiebeelement 110 in seiner ersten Position ist, wird die Vorrichtung 100, insbesondere das Reflektionselement 114, wie beschrieben mit Hilfe der Totalstation an dem Bauteil ausgerichtet, so dass das zweite Markierungsloch 108 mit der relevanten Position zumindest teilweise deckungsgleich ist. Anschließend kann das Verschiebeelement 110 in die zweite Position verschoben werden und die relevante Position kann durch das zweite Markierungsloch 108 hindurch markiert werden. Genauso kann verfahren werden, wenn das Verschiebeelement 110 zunächst in der zweiten Position ist.

Zusätzlich kann an das Verschiebeelement 110 eine oder mehrere Libellen 120 montiert werden. Die Libellen 120 können entweder auf einen optionalen Vorsprung 122 des Verschiebeelements 110 geschoben werden oder mit Hilfe eines Adapters 124, der in eine optionale Öffnung 126 des Verschiebeelements 110 eingeschoben werden kann, um die Libellen 120 fest mit dem Verschiebeelement 110 zu verbinden. Die Libellen 120 sind insbesondere dazu geeignet, eine korrekte Ausrichtung der Vorrichtung 100 im Raum, insbesondere an dem Bauteil zu gewährleisten oder zu überprüfen.

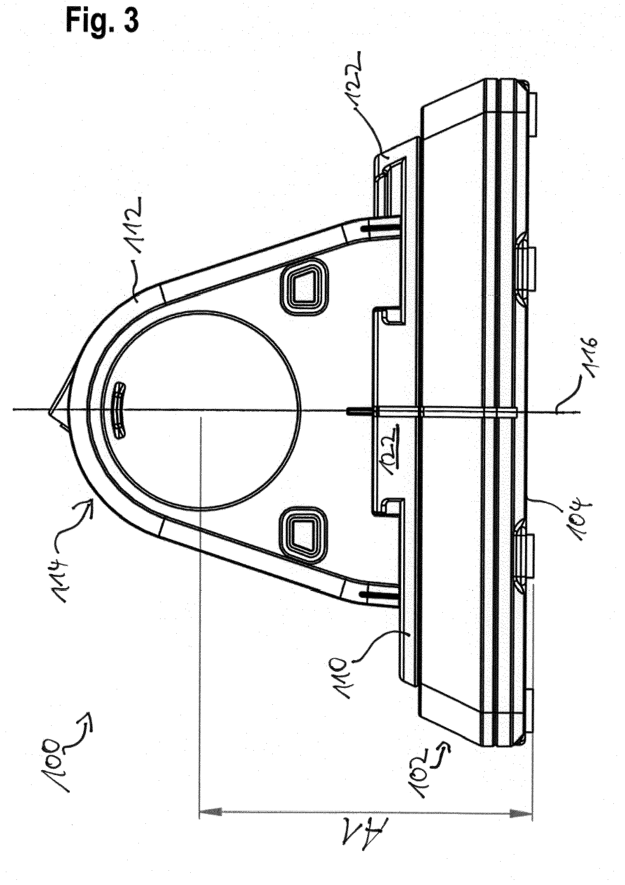

Figur 3 ist eine weitere Seitenansicht der Vorrichtung 100. Im Vergleich zu der Seitenansicht in Figur 2 ist die Vorrichtung 100 um 90° nach links gedreht. Der Mittelpunkt des Reflektionselements 114 hat einen Abstand A1 von dem Bauteil, insbesondere von dem durch das zweite Markierungsloch 108 definierten Markierungspunkt auf dem Bauteil, entlang der Ausrichtungsachse 116. Der Abstand A1 ist vorbestimmt und vorzugsweise 50 mm. Gleiches gilt entsprechend für das erste Markierungsloch 106, wenn das Verschiebeelement 110 in seiner zweiten Position ist. Da der Abstand A1 vorbestimmt, also bekannt ist, kann der Abstand A1 bei der Positionsbestimmung mit Hilfe der Totalstation berücksichtigt werden. Da die Positionsbestimmung des Markierungspunkts nur mittelbar durch die Position des Reflektionselements 114 erfolgt, kann mit Hilfe des konkreten Abstands A1 von der Position des Reflektionselements 114 auf die Position des Markierungspunkts geschlossen werden und so kompensiert werden.

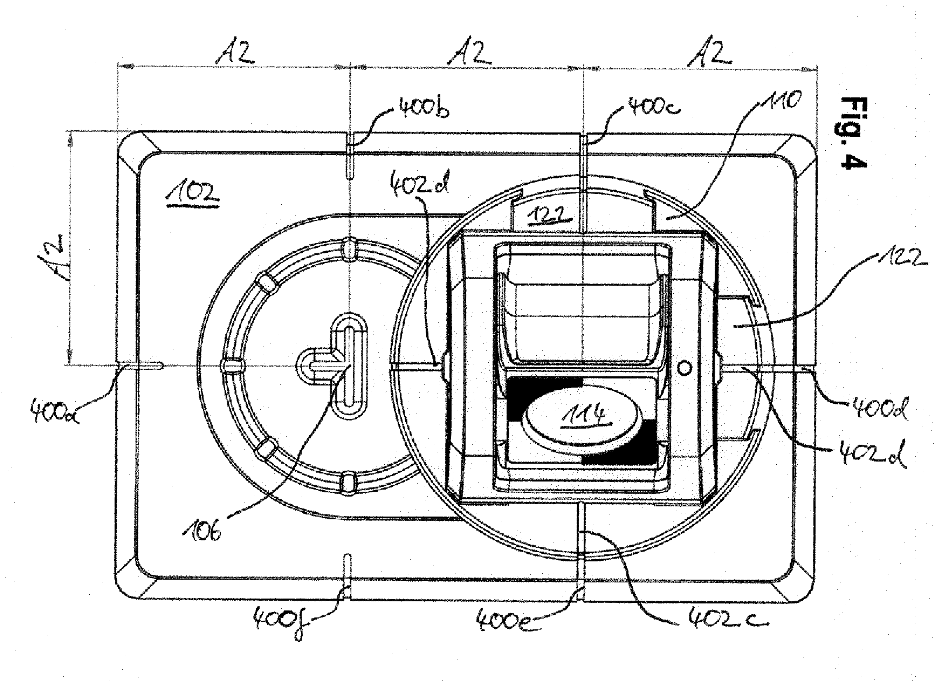

Figur 4 ist eine Draufsicht der Vorrichtung 100. Das Anlageteil 102 hat eine im Wesentlichen rechteckige Grundfläche. Weiterhin hat das Anlageteil 102 Markierungslinien 400a-400f, die rechtwinklig jeweils von einer äußeren Kante des Anlageteils 102 zu einem der Markierungslöcher 106, 108 zeigen. Die Markierungslinien 400a-400f sind gleichmäßig auf dem Anlageteil 102 angeordnet, so dass die Markierungslinien 400a-400f jeweils von der nächstliegenden parallelen Markierungslinie 400a-400f und/oder der nächstliegenden parallelen Kante des Anlageteils 102 einen Abstand A2 haben. Der Abstand A2 ist vorbestimmt und insbesondere gleich zu dem Abstand A1. Vorzugsweise beträgt der Abstand A2 50 mm. Dies ermöglicht eine einfache Handhabung der Vorrichtung 100, beispielsweise wenn ausgehend von dem Markierungspunkt weitere Punkte mit dem vorbestimmten Maß markiert werden sollen.

Zusätzlich kann das Verschiebeelement 110 Markierungslinien 402a-402d umfassen, die in der ersten und in der zweiten Position des Verschiebeelements 110 zumindest teilweise jeweils paarweise in eine Linie mit einem Teil der Markierungslinien 400a-400f gebracht werden können.

Das erste Markierungsloch 106 hat, ebenso wie das zweite Markierungsloch 108, eine T-Form. Der Markierungspunkt wird durch die Kreuzung der T-Form definiert.

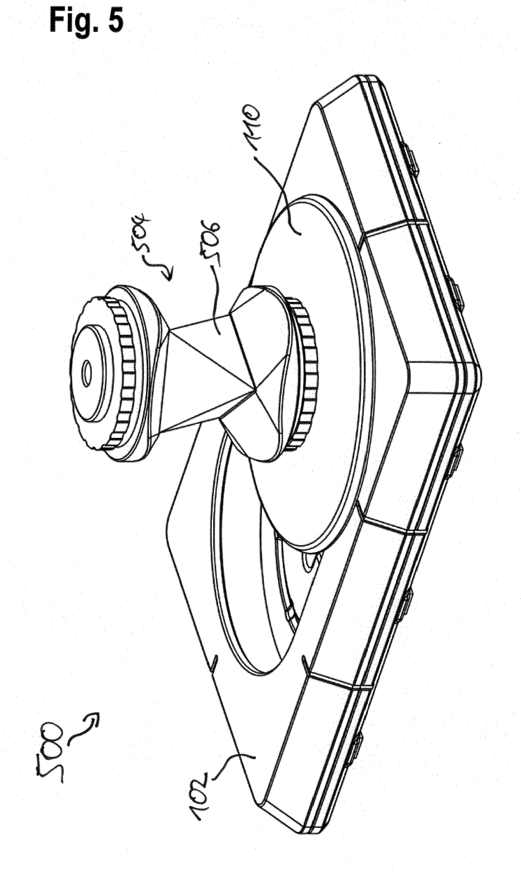

Figur 5 zeigt eine Vorrichtung 500 mit dem Anlageteil 102 und einen Reflektor 504.

Der Reflektor 504 umfasst ein Reflektionselement 506. Das Reflektionselement 506 kann Lichtimpulse um seine ganze Seite zurückreflektieren. Ein Mittelpunkt des Reflektionselements 506 kann ebenso die Ausrichtungsachsen 116, 118 schneiden wie bereits beschrieben.

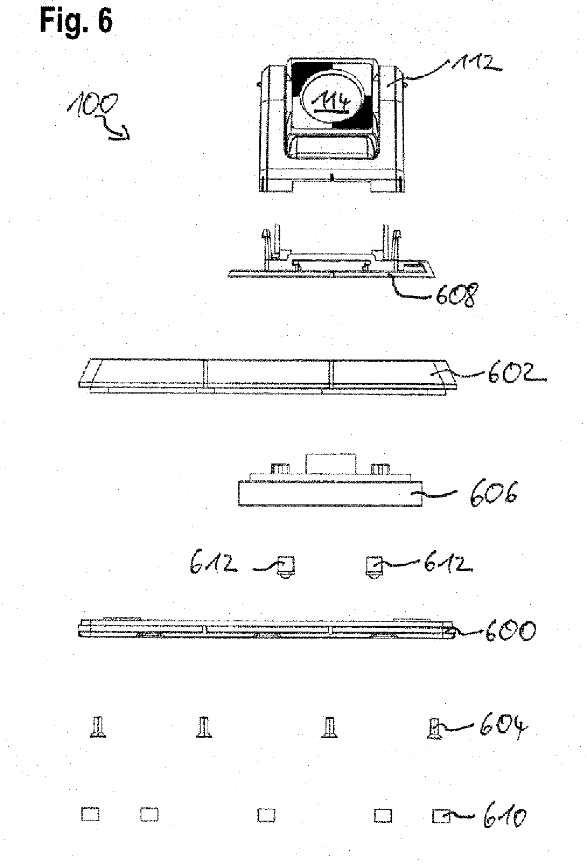

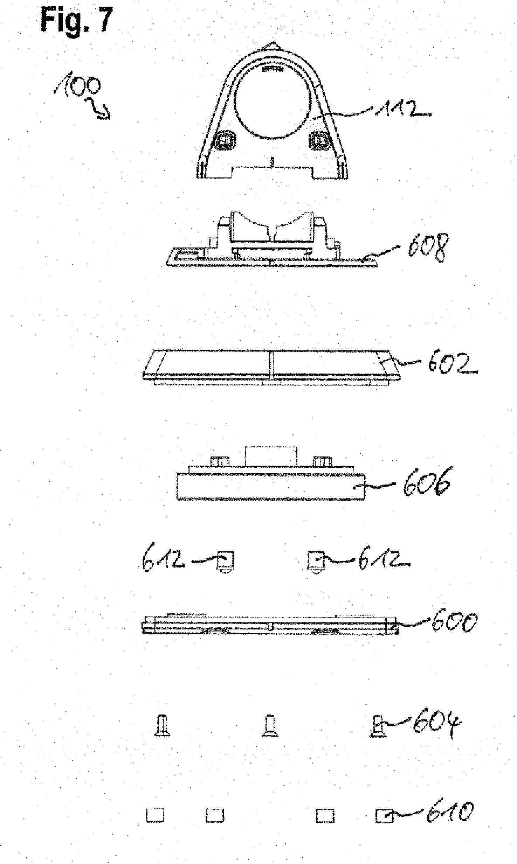

Figuren 6 und 7 sind Explosionszeichnungen der Vorrichtung 100. Die Ansicht der Figur 6 entspricht der seitlichen Ansicht der Figur 2 und die Ansicht der Figur 7 entspricht der seitlichen Ansicht der Figur 3.

Das Anlageteil 102 umfasst eine Anlageplatte 600 und eine Deckplatte 602, die mit Hilfe von Verbindungselementen 604 (nur eines ist mit dem Bezugszeichen 604 markiert), beispielsweise einer Vielzahl von Schrauben, miteinander verbunden sind. Das Verschiebeelement 110 umfasst zwei Teile 606, 608 von denen ein erster Teil 606 in dem Anlageteil 102 geführt wird und ein zweiter Teil 608, der mit dem ersten Teil 606 verbunden ist. Der Reflektor 112 ist mit dem Verschiebeelement 110, insbesondere dem zweiten Teil 608 verbindbar, das heißt, der Reflektor 112 ist reversibel verbindbar. Beispielsweise kann alternativ und wechselnd auch der Reflektor 504 mit dem Verschiebeelement 110 verbunden werden.

Die Anlageplatte 600 umfasst auf der Anlageseite 104 elastische Elemente 610 (nur eines ist mit dem Bezugszeichen 610 markiert), die insbesondere ein Verrutschen verhindern, wenn die Vorrichtung 100 an dem Bauteil angelegt ist. Die elastischen Elemente 610 können beispielsweise eine Vielzahl von Gummielementen sein.

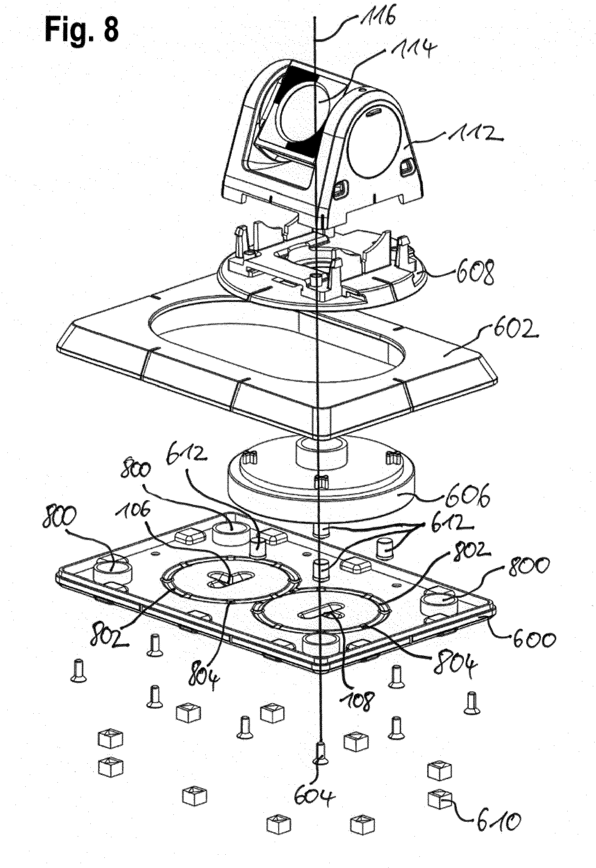

Das Verschiebeelement 110 umfasst an einer der Anlageplatte 600 zugewandten Seite mehrere Kugeldruckstücke 612. Die Kugeldruckstücke 612 umfassen beispielsweise eine Presshülse mit integrierter Feder und eine an der Feder elastisch gelagerten, rotierbaren Kugel. Die Kugeldruckstücke 612 werden in Zusammenhang mit Figur 8 näher erläutert.

Figur 8 ist eine perspektivische Explosionszeichnung der Vorrichtung 100. Die Ansicht der Figur 8 entspricht der perspektivischen Ansicht der Figur 1.

Zusätzlich zu den elastischen Elementen 610 kann der Anlageteil 102 Magneten 800 umfassen, so dass die Vorrichtung 100 reversibel mit Hilfe von Magnetkraft an einem ferromagnetischen Bauteil gehalten werden kann. Insbesondere kann so auch ein Verrutschen vermieden werden.

Weiterhin umfasst die Anlageplatte 600 zwei Rillen 802. Entlang der Rillen sind Einrastaussparungen 804 vorgesehen. Die Rillen 802 sind kreisförmige Vertiefungen in der Anlageplatte 600, die Einrastaussparungen 804 sind wiederrum lokale Vertiefungen in den Rillen 802. Die Einrastaussparungen 804 sind mit gleichmäßigen Abständen entlang der Rillen 802 angeordnet. In einem zusammengebauten Zustand der Vorrichtung 100 sind die Kugeldruckstücke 612 so in dem Verschiebeelement 110 angeordnet, dass sie in der ersten und der zweiten Position des Verschiebeelements 110 mit einer der Rillen 802 in Eingriff sind. Insbesondere sind die rotierbaren Kugeln der Kugeldruckstücke 612 mit der jeweiligen Rille 802 in Eingriff. Dadurch wird das Verschiebeelement 110 sicher in der jeweiligen ersten oder zweiten Position gehalten und ein ungewolltes Verrutschen wird verhindert. Beim Verschieben des Verschiebeelements 110 werden die elastisch gelagerten Kugeln beim Verlassen der einen Rille 802 in die Hülse des Kugeldruckstücks 612 gedrückt und entlang des Anlageplatte 600 verschoben um beim Erreichen der jeweils anderen Rille 802 in Eingriff mit dieser Rille 802 zu kommen.

Das Verschiebeelement 110 ist in dem Anlageteil 102 zumindest in der ersten und zweiten Position um die Ausrichtungsachsen 116, 118 drehbar angeordnet. Dabei bewegen sich die Kugeldruckstücke 612 entlang der jeweiligen Rille 802 und rasten bei einem Eingriff der Kugeldruckstücke 612 mit den Einrastaussparungen 804 in der jeweiligen Stellung ein. So kann das Verschiebeelement 110 mit dem Reflektor 112, 504 sicher in verschiedenen Stellungen um die Ausrichtungsachsen 116,, 118 gehalten werden.

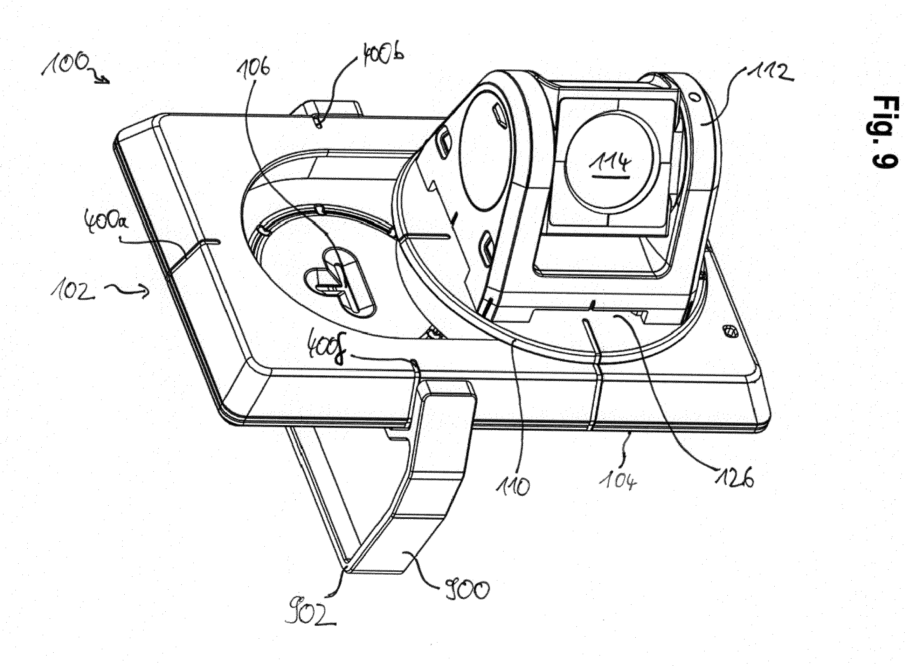

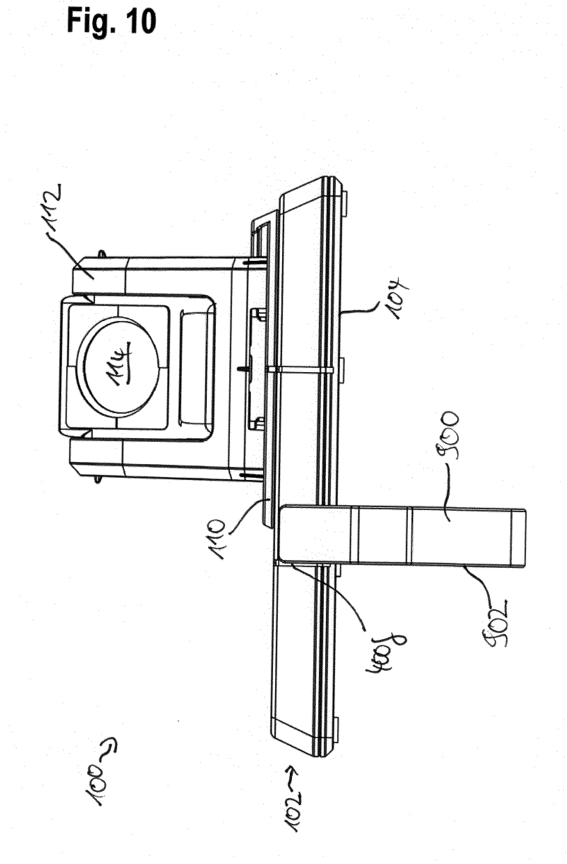

Figur 9 ist eine perspektivische Ansicht der Vorrichtung 100 mit einem Kantenteil 900. Figur 10 ist eine entsprechende Seitenansicht. Das Kantenteil 900 ist mit dem Anlageteil 102 lösbar verbunden. Vorzugsweise ist das Kantenteil 900 so angeordnet, dass es einen 90° Winkel mit dem Anlageteil 102 bildet. Insbesondere bilden die Anlageseite 104 des Anlageteils 102 und eine Anlageseite 902 des Kantenteils 900 einen 90° Winkel. Weiterhin liegt die Anlageseite 902 des Kantenteils 900 in einer Ebene, in der die weitere Ausrichtungsachse 118 liegt. So liegt bei der Anlage der Anlageseiten 104, 902 an eine Kante eines Bauteils die Ausrichtungsachse 118 genau an der Kante des Bauteils. Dadurch kann besonders einfach eine Markierung an der Kante des Bauteils gesetzt werden bzw. eine bestehende Kante auf ihre genaue Position hin überprüft werden.

Vorzugsweise ist das Kantenteil 900 so angeordnet, dass Markierungslinien 400b, 400f in der Ebene der Anlageseite 902 des Kantenteils 900 liegen.

Weiterhin kann das Kantenteil 900 alternativ auf die Ausrichtungsachse 116 ausgerichtet sein.

Gleiche oder gleichwirkende Elemente sind in allen Figuren mit denselben Bezugszeichen bezeichnet.

### Bezugszeichenliste

- 100, 500: Vorrichtung zum Setzen von Markierungen
- 102: Anlageteil
- 104: Anlageseite des Anlageteils
- 106,108: Markierungsloch
- 110: Verschiebeelement
- 112,504: Reflektor
- 114,506: Reflektionselement
- 116, 118: Ausrichtungsachse
- 120: Libelle
- 122: Vorsprung
- 124: Adapter für Libelle
- 126: Öffnung für Adapter
- 400a, 400b, 400c, 400d, 400e, 400f: Markierungslinie des Anlageteils
- 402a, 402b, 402c, 402d: Markierungslinie des Verschiebeelements
- 600: Anlageplatte
- 602: Deckplatte
- 604: Verbindungselement
- 606: Erster Teil des Verschiebeelements
- 608: Zweiter Teil des Verschiebeelements
- 610: Elastisches Element
- 612: Kugeldruckstück
- 800: Magnet
- 802: Rille
- 804: Einrastaussparung
- 900: Kantenteil
- 902: Anlageseite des Kantenteils

## Patentansprüche

1. Vorrichtung (100, 500) zum Setzen von Markierungen an Bauteilen, mit
einem Anlageteil (102) zum Anlegen an das Bauteil,
einem Verschiebeelement (110), das an dem Anlageteil (102) zwischen einer ersten und einer zweiten Position verschiebbar angeordnet ist, und
einem Reflektor (112, 504), der mit dem Verschiebeelement (110) verbunden ist,
wobei das Anlageteil (102) zumindest ein durchgehendes Markierungsloch (106, 108) umfasst, das einen Markierungspunkt definiert,
wobei der Markierungspunkt und der Reflektor (112, 504) entlang einer Ausrichtungsachse (116, 118) angeordnet sind, wenn das Verschiebeelement (110) in der ersten Position ist, und
wobei das Markierungsloch (106, 108) zugänglich ist, wenn das Verschiebeelement (110) in der zweiten Position ist.

2. Vorrichtung nach Anspruch 1, wobei die Ausrichtungsachse (116, 118) orthogonal zu einer durch das Anlageteil (102) definierten Ebene ist.

3. Vorrichtung nach einem der vorhergehenden Ansprüche, wobei der Anlageteil (102) ein weiteres Markierungsloch (106, 108) umfasst, das einen weiteren Markierungspunkt definiert.

4. Vorrichtung nach Anspruch 3, wobei der weitere Markierungspunkt und der Reflektor (112, 504) entlang einer weiteren Ausrichtungsachse (116, 118) angeordnet sind, wenn sich das Verschiebeelement (110) in der zweiten Position befindet.

5. Vorrichtung nach einem der vorhergehenden Ansprüche, wobei der Reflektor (112, 504) ein Reflektionselement (114, 506) umfasst und der Abstand zwischen dem Markierungspunkt und dem Mittelpunkt des Reflektionselements (114, 506) entlang der Ausrichtungsachse (116, 118) ein vorbestimmter Abstand ist.

6. Vorrichtung nach einem der vorhergehenden Ansprüche, wobei das Anlageteil (102) eine im Wesentlichen rechteckige Grundfläche hat.

7. Vorrichtung nach Anspruch 6, wobei das Anlageteil so ausgebildet ist, dass der Abstand von dem Markierungspunkt des Markierungslochs (106, 108) zu drei der Seiten der Grundfläche des Anlageteils (102) jeweils ein weiterer vorbestimmter Abstand ist.

8. Vorrichtung nach Anspruch 7, wobei der vorbestimmte Abstand gleich dem weiteren vorbestimmten Abstand ist.

9. Vorrichtung nach einem der vorhergehenden Ansprüche, wobei das Anlageteil (102) Markierungen (400a-400f) umfasst, die jeweils entlang einer Linie von dem Markierungspunkt des Markierungslochs (106, 108) zu einer der Seiten des Anlageteils (102) angeordnet sind.

10. Vorrichtung nach einem der vorhergehenden Ansprüche, wobei das Verschiebeelement (110) zumindest in der ersten Position oder der zweiten Position um die Ausrichtungsachse (116, 118) drehbar ist.

11. Vorrichtung nach einem der vorhergehenden Ansprüche, wobei das Verschiebeelement (110) zumindest ein Kugeldruckstück (612) umfasst.

12. Vorrichtung nach Anspruch 11, wobei das Anlageteil (102) zumindest eine Anlageplatte (600) umfasst, die auf der dem Verschiebeelement (110) zugewandten Seite eine Rille (802) umfasst, in der das Kugeldruckstück (612) führbar ist, vorzugsweise ist die Rille (802) kreisförmig um die Ausrichtungsachse (116, 118) angeordnet.

13. Vorrichtung nach einem der Ansprüche 11 oder 12, wobei die Anlageplatte (600) auf der dem Verschiebeelement (110) zugewandten Seite zumindest eine Einrastaussparung (804) umfasst, in die das Kugeldruckstück (612) einrastet, wenn sich das Verschiebeelement (110) in der ersten oder der zweiten Position befindet.

14. Vorrichtung nach einem der vorhergehenden Ansprüche, wobei das Verschiebeelement (110) zumindest einen Aufnahmevorsprung (122) umfasst, an den ein Ausrichtungselement (120) aufschiebbar ist.

15. Vorrichtung nach einem der vorhergehenden Ansprüche, mit einem Kantenteil (900), das an dem Anlageteil (102) lösbar angeordnet ist, wobei eine Seite (902) des Kantenteils (900) eine Ebene bildet, die die durch das Anlageteil (102) definierte Ebene im rechten Winkel schneidet und die Ausrichtungsachse (116, 118) in der Ebene des Kantenteils (900) liegt.
